(19) **Europäisches Patentamt**

**European Patent Office**

**Office européen des brevets**

(11) **EP 1 309 080 A1**

(12) **DEMANDE DE BREVET EUROPEEN**

(43) Date de publication:
07.05.2003 **Bulletin 2003/19**

(51) Int Cl.⁷: **H02P 7/00**, F16K 31/04

(21) Numéro de dépôt: **02292646.3**

(22) Date de dépôt: **24.10.2002**

(84) Etats contractants désignés:
**AT BE BG CH CY CZ DE DK EE ES FI FR GB GR IE IT LI LU MC NL PT SE SK TR**
Etats d'extension désignés:
**AL LT LV MK RO SI**

(30) Priorité: **24.10.2001 FR 0113756**

(71) Demandeur: **HYDROPERFECT INTERNATIONAL HPI**
**94430 Chennevieres sur Marne (FR)**

(72) Inventeur: **Lesther, Nicaise**
**94000 Creteil (FR)**

(74) Mandataire: **Berger, Helmut**
**Cabinet Madeuf,**
**56 A, rue du Faubourg Saint-Honoré**
**75008 Paris (FR)**

(54) **Système de commande d'une valve à tiroir à débit contrôlé**

(57) L'invention concerne un Système de commande d'une valve à tiroir à débit contrôlé.

Ce système est du type comprenant un moteur électrique de déplacement du tiroir entre les positions de fermeture et d'ouverture de la valve, un dispositif électrique de commande du moteur, une source d'alimentation en énergie électrique du moteur et du dispositif électrique et des moyens de sécurité assurant une fermeture ou ouverture complète de la valve dans le cas d'une déficience de ladite alimentation électrique, ces moyens comportant un réservoir d'énergie de secours. Le système est caractérisé en ce qu'il comprend un dispositif de charge du réservoir d'énergie de secours (C), qui est réalisé sous forme d'une pompe de charge comportant une inductance (L) et un circuit de charge du réservoir par l'énergie que l'inductance libère lors de la coupure de son courant d'excitation.

L'invention est utilisable pour des valves à tiroir à débit contrôlé.

EP 1 309 080 A1

## Description

L'invention concerne un système de commande d'une valve à tiroir à débit contrôlé, du type comprenant un moteur électrique de déplacement du tiroir entre des positions de fermeture et d'ouverture de la valve, un dispositif électrique de commande du moteur, une source d'alimentation en énergie électrique du moteur et du dispositif électrique et des moyens de sécurité assurant une fermeture ou ouverture de la valve dans le cas d'une déficience de ladite alimentation électrique, ces moyens comportant un réservoir d'énergie de secours et des moyens de connexion sélective de ce réservoir au moteur de commande de la valve.

Les systèmes de ce type, qui sont connus, nécessitent un réservoir d'énergie de secours de grande capacité de stockage. Il est connu d'utiliser à cette fin des condensateurs qui, par conséquent, doivent avoir une capacité élevée, ce qui a pour inconvénient majeur de constituer une solution onéreuse et encombrante.

La présente invention a pour but de proposer un système du type indiqué plus haut, qui pallie les inconvénients qui viennent d'être énoncés.

Pour atteindre ce but, le système selon l'invention est caractérisé en ce qu'il comprend un dispositif de charge du réservoir d'énergie de secours, qui est réalisé sous forme d'une pompe de charge comportant une inductance et un circuit de charge du réservoir par l'énergie que l'inductance libère lors de la coupure de son courant d'excitation.

Selon une caractéristique de l'invention, l'inductance est l'inductance du moteur précité.

Selon une autre caractéristique de l'invention, le circuit d'écoulement du courant d'excitation de l'inductance comporte des commutateurs à commande d'ouverture et fermeture par un dispositif électronique et dont la fermeture occasionne la libération de l'énergie stockée dans l'inductance et un cycle de chargement du réservoir.

Selon encore une autre caractéristique de l'invention, la charge du réservoir se fait par une série de cycles de charge successifs.

Selon encore une autre caractéristique de l'invention, le réservoir est formé par un dispositif condensateur dont la capacité est relativement faible et dépend de la tension au carré régnant à ces bornes.

Selon encore une autre caractéristique de l'invention, le condensateur peut être de l'ordre de 2000 à 6000 µF, de préférence de 4000 à 5000 µF, pour une tension de charge de 30 v.

L'invention sera mieux comprise et d'autres buts, caractéristiques, détails et avantages de celle-ci apparaîtront plus clairement dans la description explicative qui va suivre faite en référence à la figure schématique unique annexée donnée uniquement à titre d'exemple illustrant un mode de réalisation de l'invention.

La figure unique est une représentation schématique d'un système de commande d'un moteur électrique désigné par la référence générale M, de déplacement d'un organe mobile tel que le tiroir d'une valve à tiroir à débit contrôlé mobile dans un corps de valve entre des positions de fermeture et d'ouverture de la valve. Cette valve n'est pas représentée dans la mesure où sa structure ne constitue pas une caractéristique essentielle de l'invention. Cependant, une telle valve est décrite dans la demande de brevet européen N° 98400365.7 qui appartient à la demanderesse.

Le moteur M est de préférence un moteur pas à pas dont l'inductance est indiquée en L. Le circuit d'excitation de l'inductance L comporte quatre commutateurs constitués des transistors Q1 à Q4 montés sous forme d'un pont entre un potentiel électrique U d'un dispositif de source tel qu'une batterie et une résistance R dont l'autre borne est mise à la terre. Les quatre transistors sont commandés par un micro-contrôleur MC.

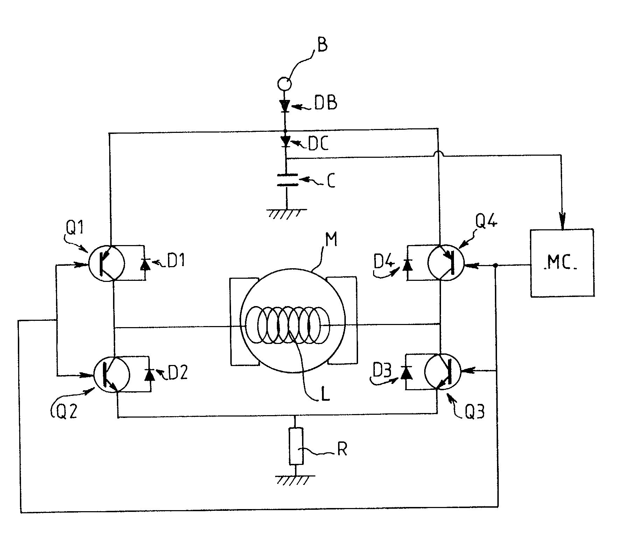

Conformément à la figure 1, lorsque les transistors Q1 et Q3 sont conducteurs, l'inductance L est parcourue par un courant d'excitation dans un sens et, lorsque les transistors Q2 et Q4 sont conducteurs, un courant d'excitation traverse l'inductance dans le sens inverse.

Le système de commande comporte en outre un réservoir d'énergie de secours, formé par un dispositif condensateur C, qui a pour fonction d'assurer que le tiroir de la valve se déplace jusque dans sa position de fermeture ou d'ouverture dans le cas d'une déficience de son alimentation électrique U. La tension entre les bornes du dispositif condensateur C est contrôlée par le micro-contrôleur MC. Le dispositif condensateur C est relié par l'intermédiaire d'une diode DC au circuit d'excitation, la cathode de la diode étant reliée au dispositif condensateur. Une diode DB est placée entre le potentiel d'alimentation U et le point de connexion de l'anode de la diode DC.

Il est encore à noter qu'à chaque transistor Q1 à Q4 est associée respectivement une diode libre D1 à D4 qui est polarisée dans le sens inverse de l'émetteur du transistor et est conductrice lorsque son transistor est ouvert.

En mode du fonctionnement normal, le moteur est alimenté par le potentiel électrique fourni par la batterie.

On décrira ci-après le fonctionnement du système selon l'invention, qui fera apparaître d'autres caractéristiques techniques d'ordre fonctionnel.

Avant de mettre en service la machine qui est équipée de la valve à tiroir à débit contrôlé que le système selon l'invention est destiné à commander, on prévoit une période préalable de charge du condensateur C, constituant le réservoir d'énergie de secours. A cette fin, pour éviter de faire tourner le moteur M, seulement une phase du moteur sera commandée par intermittence dans le même sens à l'aide des transistors Q1 à Q4, sous la commande du micro-contrôleur MC. La période de charge préalable comporte une pluralité de cycles de conduction et de blocage des transistors, dont le nombre est choisi de façon à obtenir entre les bornes du condensateur C la tension souhaitée de par exemple 30 volts, le potentiel de batterie pouvant être de 24 volts. La période de charge aura donc pour but de porter la tension entre les bornes du condensateur de 24 volts de la tension de batterie à la valeur de 30 volts.

Pendant cette période de charge, à chaque coupure du courant d'excitation de l'inductance L par déblocage des transistors appropriés, cette inductance L libère son énergie, ce qui occasionne l'écoulement d'un courant passant par les diodes D1 à D4 correspondantes. Chaque écoulement de courant charge alors des condensateurs C d'un incrément de tension. On répètera le cycle d'écoulement du courant d'excitation et de coupure de ce courant autant de fois qu'il est nécessaire pour atteindre la tension de secours du condensateur C.

Ainsi, le système selon l'invention agit en pompe de charge permettant de charger le condensateur à l'énergie voulue avant de commander le moteur dans son mode de fonctionnement normal.

L'invention permet d'utiliser un dispositif condensateur C d'une capacité relativement faible. En effet, étant donné que l'énergie emmagasinée dans le condensateur est

$$E = \tfrac{1}{2}\, CU^2$$

avec C constituant la capacité du condensateur et U la tension entre ses bornes, on constate qu'il est plus avantageux d'augmenter la tension U aux bornes du condensateur plutôt que sa capacité pour atteindre l'énergie E nécessaire à la sécurité. Cela apporte les avantages d'une valeur de capacité relativement faible et ainsi d'un prix réduit du condensateur dont les dimensions sont donc faibles. D'autre part, la tension élevée aux bornes du condensateur est plus facilement exploitable par le moteur pas à pas, car il a besoin d'une tension élevée de commande. On constate en outre que, pour pouvoir fonctionner en pompe de charge, le système de commande ne nécessite que l'ajout de quelques diodes au dispositif d'attaque du moteur, pour conduire le courant de charge vers le condensateur, dans la mesure où la bobine de charge est celle du moteur.

A titre d'exemple, pour fermer la valve, il faut l'énergie correspondant à une force de 35N sur l'axe moteur sur une longueur de 5 mm. Avec un rendement de moteur à 30% il faut une énergie moteur de 0,583J. Cette énergie peut être stockée dans un dispositif condensateur d'une capacité de 4000 µF. Avec une inductance L = 0,32 x 10$^{-3}$ H et une résistance R = 50 Ω, le temps de charge T = L/R est égal à 6,4 x 10$^{-6}$ secondes. Pour augmenter la tension aux bornes du dispositif condensateur C de 24 volts à 30 volts, il faut un nombre d'impulsions N = 1,953 x 10$^3$. Avec une fréquence d'excitation fournie par le microcontrôleur MC de 1000 Hz, le temps de charge du condensateur C n'est que d'environ 4 secondes. Par conséquent, la phase de chargement du dispositif condensateur, préalablement à la mise en service du moteur, ne durera que 4 secondes.

Il ressort de la description qui vient d'être faite, que l'invention propose un dispositif de secours qui n'est que d'un très faible encombrement, puisqu'il s'agit uniquement d'ajouter aux éléments nécessaires pour le fonctionnement du moteur, un dispositif condensateur d'une faible capacité et de six diodes au total de canalisation du courant de chargement du dispositif condensateur, l'inductance nécessaire pour la charge étant constitué de l'inductance du moteur.

**Revendications**

1. Système de commande d'une valve à tiroir à débit contrôlé, du type comprenant un moteur électrique de déplacement du tiroir entre les positions de fermeture et d'ouverture de la valve, un dispositif électrique de commande du moteur, une source d'alimentation en énergie électrique du moteur et du dispositif électrique et des moyens de sécurité assurant une fermeture ou ouverture complète de la valve dans le cas d'une déficience de ladite alimentation électrique, ces moyens comportant un réservoir d'énergie de secours et des moyens de connections sélectives de ce réservoir au moteur de commande de la valve, **caractérisé en ce qu'**il comprend un dispositif de charge du réservoir d'énergie de secours (C), qui est réalisé sous forme d'une pompe de charge comportant une inductance (L) et un circuit de charge du réservoir par l'énergie que l'inductance libère lors de la coupure de son courant d'excitation.

2. Système selon la revendication 1, **caractérisé en ce que** l'inductance (L) est l'inductance du moteur (M) précité.

3. Système selon la revendication 2, **caractérisé en ce que** le circuit d'écoulement du courant d'excitation de l'inductance (L) comporte des commutateurs (Q1 à Q4) à commande d'ouverture et fermeture par un dispositif électronique (MC) et dont l'ouverture occasionne la libération de l'énergie stockée dans l'inductance (L) et un cycle de charge du réservoir (C).

4. Système selon l'une des revendications 1 à 3, **caractérisé en ce que** la charge du réservoir (C) se fait par une série de cycles de charge successifs.

5. Système selon l'une des revendications 1 à 4, **caractérisé en ce que** le réservoir (C) est formé par un dispositif condensateur dont la capacité est relativement faible et dépend de la tension au carré régnant à ses bornes.

6. Système selon la revendication 5, **caractérisé en ce que** le dispositif condensateur (C) peut être de l'ordre de 2000 à 6000 µF, de préférence de 4000 à 5000 µF, pour une tension de charge de 30 V.

**Office européen
des brevets**

**RAPPORT DE RECHERCHE EUROPEENNE**

Numéro de la demande

EP 02 29 2646

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int.Cl.7) |
|---|---|---|---|
| Y | EP 0 992 726 A (HYDROPERFECT INT) 12 avril 2000 (2000-04-12) * colonne 5, ligne 16 - ligne 19; figure 2 * | 1,2 | H02P7/00 F16K31/04 |
| | --- | | |
| Y | DE 41 11 853 A (INTRASYS GMBH) 15 octobre 1992 (1992-10-15) * abrégé; figure 1 * --- | 1,2 | |
| A | US 4 926 354 A (PATTANTYUS TAMAS) 15 mai 1990 (1990-05-15) * abrégé; figure 2A * ----- | 3 | |

DOMAINES TECHNIQUES RECHERCHES (Int.Cl.7)

H02P
F16K

Le présent rapport a été établi pour toutes les revendications

| Lieu de la recherche | Date d'achèvement de la recherche | Examinateur |
|---|---|---|
| LA HAYE | 2 janvier 2003 | Beyer, F |

CATEGORIE DES DOCUMENTS CITES

X : particulièrement pertinent à lui seul
Y : particulièrement pertinent en combinaison avec un
   autre document de la même catégorie
A : arrière–plan technologique
O : divulgation non–écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03 82 (P04C02)

**ANNEXE AU RAPPORT DE RECHERCHE EUROPEENNE
RELATIF A LA DEMANDE DE BREVET EUROPEEN NO.**                 EP 02 29 2646

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

02-01-2003

| Document brevet cité au rapport de recherche | | | Date de publication | Membre(s) de la famille de brevet(s) | | | Date de publication |
|---|---|---|---|---|---|---|---|
| EP 0992726 | A | | 12-04-2000 | FR | 2784442 | A1 | 14-04-2000 |
| | | | | BR | 9904458 | A | 16-01-2001 |
| | | | | EP | 0992726 | A1 | 12-04-2000 |
| DE 4111853 | A | | 15-10-1992 | DE | 4111853 | A1 | 15-10-1992 |
| US 4926354 | A | | 15-05-1990 | AU | 6147790 | A | 28-04-1991 |
| | | | | CA | 2011994 | A1 | 26-03-1991 |
| | | | | CN | 1050651 | A | 10-04-1991 |
| | | | | WO | 9105402 | A1 | 18-04-1991 |

EPO FORM P0460

Pour tout renseignement concernant cette annexe : voir Journal Officiel de l'Office européen des brevets, No.12/82